# EUROPEAN PATENT APPLICATION

(11) **EP 2 722 597 A2**
(43) Date of publication of application: **23.04.2014**
(21) Application number: 13187503.1
(22) Date of filing: 07.10.2013
(51) Int. Cl.: F24D 12/02, F24D 19/10

(54) **Method, apparatus and system for selecting heating source in heating system**

(30) Priority: 16.10.2012 FI 20126074
(71) Applicant: There Corporation OY, 65100 Vaasa (FI)
(72) Inventor: Sormunen, Toni, 33880 Lempäälä (FI); Lasen, Fredrik, 65630 Karperö (FI); Rönnlund, Kaj, 65230 Vaasa (FI); Talonen, Matti, 66500 Vähäkyrö (FI)
(74) Representative: Espatent Oy

(57) **Abstract**

An apparatus including a first heating source for providing a heating effect using a first heating energy; a second heating source for providing a heating effect using a second heating energy; and a communication interface for transceiving information, between the apparatus and a network. The apparatus further includes at least one processor; and at least one memory including computer program code; the at least one memory and the computer program code configured to, with the at least one processor, cause the apparatus to: receive quality of service information for the first and the second heating energy; select at least one of the first and the second heating source using the received quality of service information; and activate the selected heating source for providing a heating effect.

## Description

### TECHNICAL FIELD

The present application generally relates to a system, method and apparatus for selecting a heating source in a heating system.

### BACKGROUND ART

A heating system typically comprises a heating source that provides a heating effect for a heating system. The heating system may be configured to provide heating for a dedicated environment, for example a building or other limited space.

Different heating sources for a heating system exist, for example oil-based heating and electricity-based heating. When building a heating system, long-term costs may be estimated for different heating energies available and decisions made based on the available information. However, prices and other quality of service parameters typically change in long-term over the years and decision making for the utilized heating energy may be difficult. Furthermore, the prices may vary in short-term as well, for example in monthly-basis, even on hourly-basis, depending on consumption peaks.

It is possible to manufacture a heating system comprising separate sub-systems for different heating energies. The user could then select which heating subsystem to use. Implementation for such solution would be however very expensive and unbearable for cost reasons, at least.

A solution is needed for cost-efficiently providing a heating system capable of utilizing different heating sources and heating energies, wherein selecting a desired heating source may base on user selected criteria and real-time energy information.

### SUMMARY

According to a first example aspect of the invention there is provided an apparatus comprising:
a first heating source for providing a heating effect using a first heating energy;
a second heating source for providing a heating effect using a second heating energy;
a communication interface for transceiving information, between the apparatus and a network;
at least one processor; and
at least one memory including computer program code;
   the at least one memory and the computer program code configured to, with the at least one processor, cause the apparatus to:
   receive quality of service information for the first and second heating energy;
   select at least one of the first and second heating source using the received quality of service information; and
   activate the selected heating source for providing a heating effect.

In an embodiment, the first and the second heating source comprises at least one of the following:
- fuel based heating; and
- electricity based heating.

In an embodiment, the fuel based heating utilizes at least one of the following fuels:
- natural gas;
- liquefied petroleum gas;
- fuel oil;
- biomass;
- coal; and
- wood.

In an embodiment, the electricity based heating utilizes at least one of the following:
- national grid electricity;
- local solar electricity;
- local stored electricity; and
- local wind electricity.

In an embodiment, the apparatus further comprises:
a furnace, configured to heat an intermediary fluid using at least one of the first and the second heating source.

In an embodiment, the intermediary fluid comprises at least one of the following:
- air;
- steam;
- oil; and
- water.

In an embodiment, the furnace comprises the first and the second heating source; and the furnace is further configured to heat the intermediary fluid using at least one of the heating sources.

In an embodiment, the at least one memory and the computer program code configured to, with the at least one processor, cause the apparatus to:
maintain user preferences for the first and the second heating energy; and
select at least one of the first and second heating sources using the received quality of service information and the user preferences.

In an embodiment, the first heating source comprises fuel based heating and the second heating source comprises electricity based heating.

In an embodiment, the quality of service information comprises at least one of the following:
- price information of the heating energy;
- air pollutant information of the heating energy;
- availability information of the heating energy;
- reserve information of the heating energy; and
- service provider information of the heating energy.

According to a second example aspect of the invention there is provided a method for controlling a heating system, the method comprising:
providing a first heating source using a first heating energy for providing a heating effect:
providing a second heating source using a second heating energy for providing a heating effect:
receiving quality of service information for the first and second heating energy;
selecting at least one of the first and second heating source using the received quality of service information; and
activating the selected heating source for providing a heating effect.

According to a third example aspect of the invention there is provided a computer program embodied on a computer readable medium comprising computer executable program code, the computer executable program code, when executed by at least one processor of an apparatus, causes the apparatus to:
receive quality of service information for a first and a second heating energy;
select at least one of a first and a second heating source using the received quality of service information, wherein the first heating source using the first heating energy for providing a heating effect and the second heating source using the second heating energy for providing a heating effect; and
activate the selected heating source for providing a heating effect.

According to a fourth example aspect of the invention there is provided a system comprising:
a server comprising:
   a communication interface for transceiving information, between an apparatus and the server;
   at least one processor; and
   at least one memory including computer program code;
   the at least one memory and the computer program code configured to, with the at least one processor, cause the server to:
      maintain quality of service information for a first and a second heating energy; and
      transmit the quality of service information for the first and the
   second heating energy to the apparatus;
an apparatus comprising:
   a first heating source for providing a heating effect using the first heating energy;
   a second heating source for providing a heating effect using a second heating energy;
   a communication interface for transceiving information, between the apparatus and the server;
   at least one processor; and
   at least one memory including computer program code;
   the at least one memory and the computer program code configured to, with the at least one processor, cause the apparatus to:
      receive the quality of service information for the first and second heating energy;
      select at least one of the first and second heating source using the received quality of service information; and
      activate the selected heating source for providing a heating effect; and
   a heating channel comprising:
      an intermediary fluid heated by the heating effect, wherein the heated intermediary fluid is configured to transfer heat to an external environment of the heating channel.

Different non-binding example aspects and embodiments of the present invention have been illustrated in the foregoing. The above embodiments are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

The invention will be described, by way of example only, with reference to the accompanying drawings, in which:
- Fig. 1: shows a schematic picture of a system according to an example embodiment of the invention;
- Fig. 2: presents an example block diagram of a heating system in which various embodiments of the invention may be applied;
- Fig. 3: presents an example block diagram of a controller device in which various embodiments of the invention may be applied;
- Fig. 4: presents an example block diagram of a server apparatus in which various embodiments of the invention may be applied; and
- Fig. 5: shows a flow diagram showing operations in accordance with an example embodiment of the invention.

### DETAILED DESCRIPTION

In the following description, like numbers denote like elements.

In an embodiment, a method, an apparatus and a system is provided that can be used for controlling a heating system, especially selecting the heating energy used for the heating system according to pre-selected criteria. The heating system may utilize different heating sources within the same system. The different heating sources may be implemented even within the same heating apparatus.

In an embodiment, oil heating source and electricity heating source may be implemented to the same heating apparatus. The heating apparatus may comprise a furnace, for example. The heating system may be capable of using electricity heating as a backup for oil heating, if oil runs out or there is a malfunction in the oil heating, for example. However, when electricity is cheaper or more eco-friendly in terms of CO2 production, for example, it is possible to use both heating sources and optimize the heating system, providing gains both in financial and ecological terms. The furnace may comprise both an oil heating source, such as a burner for example, and an electricity heating source, such as en electrical resistance for example. Both heating sources may be utilized to provide a heating effect within the heating apparatus for the heating system.

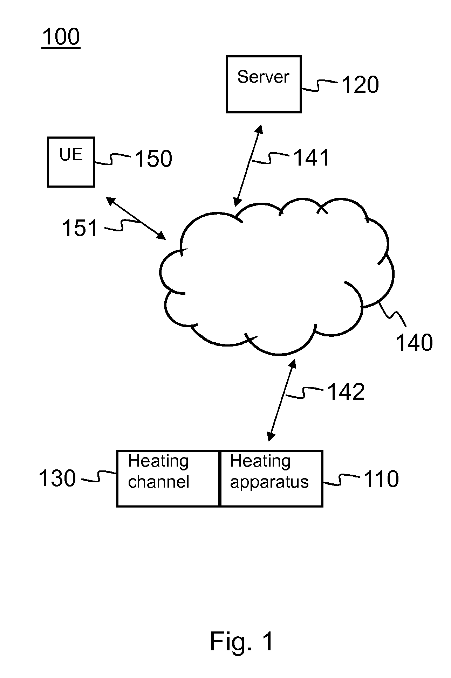

Fig. 1 shows a schematic picture of a system 100 according to an example embodiment of the invention. The system 100 comprises an apparatus 110 configured to provide heating for the system 100. The apparatus 110 may be connectable to a heating channel 130. The heating channel 130 is configured to provide the heat to a limited environment, such as a building. In an embodiment, the heating channel 130 may circulate intermediary fluid comprising for example air, steam, oil or water.

In an embodiment, the apparatus 110 comprises a furnace comprising a first and a second heating source; and the furnace is further configured to heat the intermediary fluid using at least one of the heating sources.

In an embodiment the apparatus 110 is configured to be connected to a network 140, such as Internet, over a data connection 142. The data connection 142 may be a wired connection or a wireless connection. The wired connection may comprise local area network (LAN) such as Ethernet, for example. The wireless connection may comprise wireless local area network (WLAN) or a cellular network access, for example.

In an embodiment, the apparatus 110 comprises a controller device (not shown) accessible over the network to a server 120. The server 120 is connected to the network 140 via a data connection 141. The data connection 141 may comprise corresponding data connection as data connection 142. Using the controller device the apparatus 110 may read periodically (real time or in near real time) quality of service information for different heating energies, such as price of electricity and price of oil, for example. The server 120 may receive the quality of service information from various sources, but may be expected to be real time and correct to be used for controlling the heating system 100. The quality of service information (such as price information) may be fetched periodically from the server 120 to the apparatus 110 or pushed by the server 120 to the apparatus 110.

In an embodiment, a controller device of the heating apparatus 110 controls the heating system with a relay or similar signaling mechanism and selects between different heating sources. The heating sources may comprise, for example, oil and electricity. The selection for which energy source is utilized for a heating effect may be done, for example, on hourly basis, or on any user defined period basis. Hourly basis may be the granularity of electricity price, for example. If the granularity of pricing is smaller, a shorter time period may be selected dynamically. Further if the granularity is greater, a longer time period may be selected.

In an embodiment, the system 100 may comprise a user equipment 150 connected to the network 140 over a data connection 151. The data connection 151 may comprise corresponding data connection as data connection 142. The user equipment 150 may comprise, for example, a mobile phone, a tablet, a laptop, a PDA or a computer. The user equipment 150 may be used to access the apparatus 110 remotely and to control the heating. Such controlling may comprise switching on/off the heating, selecting certain heating source of the apparatus 110 or setting up parameters for automatic heating control for the heating apparatus 110. The user equipment 150 may be capable of downloading and locally executing software program code. The software program code may be a client application of a control application running on the apparatus 110 of the system 100.

In an embodiment, the apparatus 110 may transmit control information to the network 140 and to a remote server, similar to server 120. The control information may comprise used control parameters, user preferences, settings or history data, for example. The control information transmitted to the network 140 or to the server 120 may be used by other users of the heating service system or the same user storing the control information originally. The information may be available as cloud service. For example, when the user moves to another house or apartment, the availability of earlier home's control information may be very useful. Same applies to a situation when the user owns several houses or apartments and wants to use similar control information in all of them. Furthermore, when renewing the heating apparatus 110 at home, the availability of the earlier control information to setup the new equipment may be useful. Also the heating energy suppliers may utilize the control information for their purposes if users allow access for that.

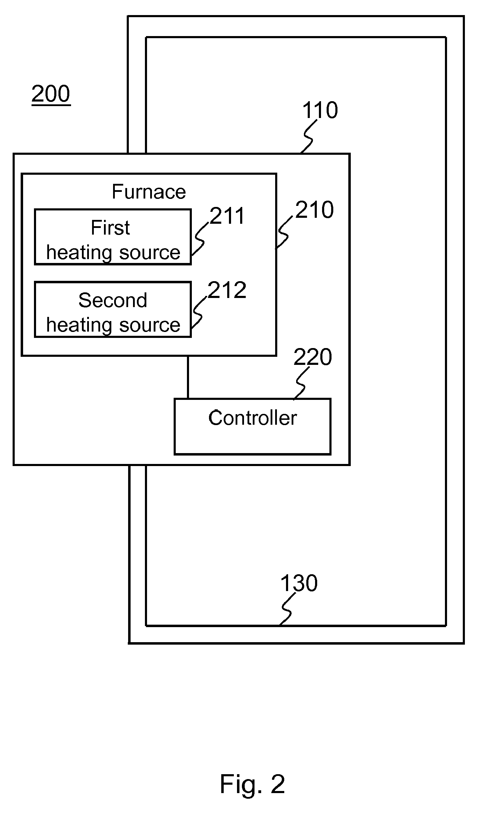

Fig. 2 presents an example block diagram of a heating system 200 in which various embodiments of the invention may be applied. An apparatus 110 may comprise for example a furnace 210 and a controller device 220. The apparatus 110 may be connectable to a heating channel 130. The heating channel 130 is configured to provide the heat to a limited environment, such as a building. In an embodiment, the heating channel 130 may circulate intermediary fluid comprising for example air, steam, oil or water. The intermediary fluid may be heated using a heating effect provided by at least one of a first heating source 211 and a second heating source 212 of the furnace 210. The heated intermediary fluid may then be transferred along the heating channel 130 to provide heating.

In an embodiment, a plurality of heating sources 211, 212 may be utilized in the apparatus 110. In Fig.2 only two heating sources 211, 212 are illustrated but the number of the sources may be greater.

In an embodiment, plurality of heating energies may be used for the heating sources 211, 212. For example, the first heating source 211 may comprise fuel-based heating source using heating oil and the second heating source 212 may comprise electricity-based heating source using electricity. A single heating source 211, 212 may further utilize different heating energies. For example, an electricity based heating source 212 may utilize different sources for electricity, such as national grid and local solar power, for example. Based on the received quality of service information (for example price), the desired electricity type may be selected.

In an embodiment, plurality of electricity based heating energies may be used for the heating sources 211, 212. For example, the first heating source 211 may comprise national grid based heating source using national grid electricity and the second heating source 212 may comprise local solar power based heating source using local solar electricity. Based on the received quality of service information (for example price), the desired electricity type and heating source 211,212 may be selected.

The controller device 220 is operationally connected to the apparatus 110 and the controller device 220 is configured to control the heating operations of the apparatus 110. Such controlling operations may comprise, for example, selecting a heating source 211, 212 based on pre-defined criteria and maintaining the criteria and quality of service information for different heating energies used by the heating sources 211, 212.

In an embodiment, a heating system 200 is provided, where a heating energy can be selected between electricity and oil, for example. Similarly, selection could be made between locally product solar power and nuclear power from national electricity grid, for example.

In an embodiment, instead of heating system, the invention is applicable also for cooling. In such case, the apparatus 110 comprises different cooling sources 211, 212, a controller device 220 for controlling the cooling sources 211, 212 and a cooling channel 130 for circulating a cooling fluid around an environment, such as a building, for example.

The controller device 220 is configured to provide controlling signals to heating system 200 and especially to apparatus 110 based on selection criteria and utilizing quality of service information. The quality of service information, such as price and air pollutant information, may be received by the controller device 220 over a network connection from a server (not shown), for example. A data transmission protocol may be configured to the controller device 220 and the server to fetch or push quality of service information from the server to the controller device 220.

The controller device 220 may be integrated to the apparatus 110 or connected as a separate device. If connected as a separate device, the apparatus 110 may comprise a local connector, such as USB for example, and the controller device, such as a laptop, a tablet or a smartphone, may be connected to the apparatus 110 over the local connector.

In an embodiment, the controller device 220 comprises an algorithm and means to execute the algorithm in the controller device 220 to control the selection between a first and a second heating source. Based on the algorithm, a signaling mechanism between the controller device 220 and the heating sources 211, 212 may be provided. Typically a relay or similar is used to control the heating sources 211, 212. Alternatively, a data-bus for sending commands may be used. Embodiments of the invention provide benefits and advantages. Real-time quality of service information may be used to control a heating system. For example, prices of different heating energies may vary remarkably even in short-term. Such up-to-date price information may be used to select a desired heating source and heating energy.

The apparatus 110 may comprise a furnace 210 with a first heating source 211 and a second heating source 212. The first heating source 211 may be an oil heating source using heating oil with a first price. The second heating source 212 may be an electricity heating source using electricity with a second price. Both heating sources 211, 212 may be comprised in a same furnace 210 and thus capable of heating same intermediary fluid in a heating channel 130.

In an embodiment, in such a combined heating system, when the electricity price increases rapidly, for example during a really cold winter, the heating system 200 may select the oil and the maximum price one pays for heating is the price of oil. In this respect the price of oil, is the maximum price of heating. The price of the electricity provides the savings, when the price decreases.

In an embodiment, a user of the heating system 200 may operate the system via a controller device 220. The user may observe the quality of service information, such as price, via the controller device user interface and adjust the criteria used for controlling the heating system 200. For example, the user can observe the price of electricity and the electricity consumption in the household, where both oil and electricity is used for heating. Electricity consumption should jump up when the price of electricity goes below the price of oil, and vice versa.

In an embodiment, user preferences may be maintained for a first and a second heating energy. The user preferences may comprise preferred heating energies or preferred electricity sources, for example. Furthermore, the user preferences may comprise threshold values for the quality of service information. For example, the user preferences may be used to define control features using multiple sources of quality of service information (such as price, air pollution, etc.). The user may adjust the preferences to provide a weighted control of selecting the heating source using multiple criteria, such as cost and air pollution. By doing this, the user may prefer eco-friendly energy sources over cheaper sources up to a defined threshold, for example, and vice versa. The controller device 220 may then be configured to select at least one of the first and the second heating source using the received quality of service information and the user preferences.

The controller device 220 may comprise an adaptation layer to convert controller device 220 internal communication signals to wireless/wired technology communication signals for the first and second heating sources 211,212 and vice versa. A wireless/wired technology controller layer may be comprised to incorporate wireless/wired technology specific retransmissions.

In an embodiment, the controller device 220 may comprise a wireless/wired technology specific network layer to take care of communication with the adaptation layer and the heating sources 211, 212 in the heating system 200. It is technology specific how the heating source 211, 212 is added to the heating system 200. After the heating source 211, 212 has been added and it is known to the controller device 220, configuration tasks may take place. The controller device 220 starts to execute set of tasks, inquiries and commands, which may be pre-configured or dynamic as the controller device 220 learns more about the heating source introduced to the system 200.

In an embodiment, the set of tasks executed by the controller device 220 may be affected by the controller device capabilities. The controller device 220 may for example inquire heating source information, e.g. manufacturer, device type, serial number etc. The list above is not exhaustive. The controller device 220 may also set device configuration, for example message routing information or device wake-up interval and it turns on the transceiver within configured intervals for communication with wireless/wired technology controller or with other heating sources 211, 212 in the system 200.

In an embodiment, a task execution trigger for the heating system 200 may comprise a triggering message indicating a heating source active state. Such triggering message may be initiated by a controlling application of the controller device 220 or user initiated. The controller device 220may send the triggering signal to be used as a task execution trigger for the heating sources 211, 212 based on processing quality of service information (price, CO2 etc.) and user pre-defined criteria. The active state means that the heating source is turned on and heating of heating channel 130 fluid is possible.

When the user needs to communicate with the heating system 200, user requests may be delivered by the controller device 220 to a desired service object of the application layer, which in turn communicates with the adaptation layer before transmitting messages via the wireless/wired technology layer to the heating source 211, 212.

In an embodiment, the controller device 220 comprises cached quality of service information that can be updated automatically using a network connection or manually by the user. The user may also update the quality of service information in the controller device 220 without the network connection.

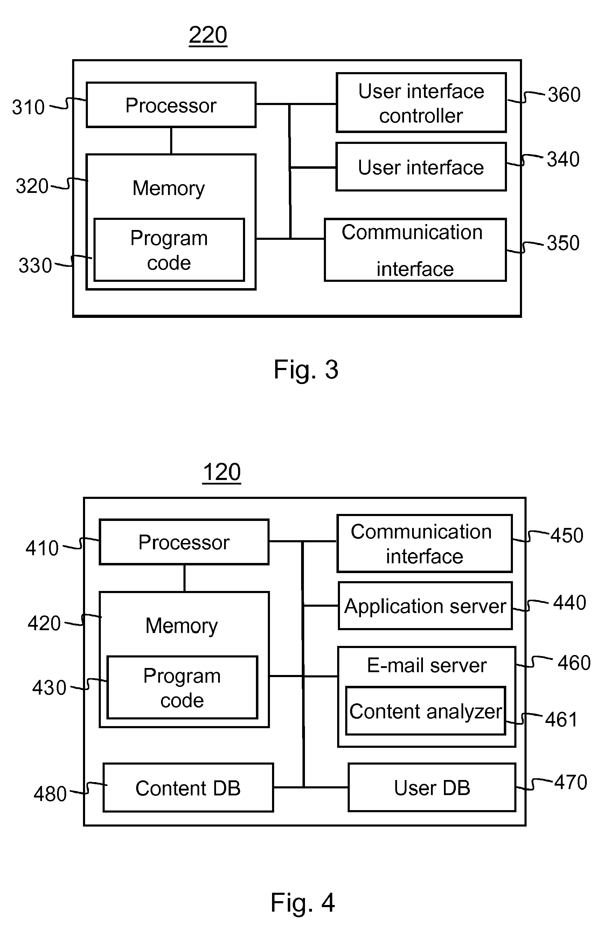

Fig. 3 presents an example block diagram of a controller device 220 in which various embodiments of the invention may be applied. The controller device 220 may be a laptop, a desktop, a tablet, a computer, a mobile phone or an integrated controller device.

A general structure of a controller device 220 comprises a user interface 340, a communication interface 350, a processor 310, and a memory 320 coupled to the processor 310. The controller device 220 further comprises software 330 stored in the memory 320 and operable to be loaded into and executed in the processor 310. The software 330 may comprise one or more software modules and can be in the form of a computer program product. A service object, a service function, a heating control function, a quality of service information update function, a heating source activation/inactivation function, an application layer, an adaptation layer and a wireless technology layer, may be comprised in the software modules. The controller device 220 may further comprise a user interface controller 360.

The processor 310 may be, e.g., a central processing unit (CPU), a microprocessor, a digital signal processor (DSP), a graphics processing unit, or the like. Fig. 3 shows one processor 310, but the controller device 220 may comprise a plurality of processors.

The memory 320 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The controller device 220 may comprise a plurality of memories. The memory 320 may be constructed as a part of the controller device 220 or it may be inserted into a slot, port, or the like of the controller device 220 by a user. The memory 320 may serve the sole purpose of storing data, or it may be constructed as a part of a device serving other purposes, such as processing data.

The user interface controller 360 may comprise circuitry for receiving input from a user of the controller device 220, e.g., via a keyboard, a graphical user interface shown on the display of the user interface 340 of the controller device 220, a speech recognition circuitry, or an accessory device, such as a headset, and for providing output to the user via, e.g., a graphical user interface or a loudspeaker.

The communication interface module 350 implements at least part of data transmission. The communication interface module 350 may comprise, e.g., a wireless or a wired interface module. The wireless interface may comprise such as a WLAN, Z-Wave, Zigbee, Bluetooth™, Infrared (IR), Radio Frequency Identification (RF ID), GSM/GPRS, CDMA, WCDMA, or LTE (Long Term Evolution) radio module. The wired interface may comprise such as Universal Serial Bus (USB), Local Area Network (LAN) such as Ethernet or M-bus, for example. The communication interface module 350 may be integrated into the controller device 220, or into an adapter, card or the like that may be inserted into a suitable slot or port of the controller device 220. The communication interface module 350 may support one data interface technology or a plurality of technologies. The controller device 220 may comprise a plurality of communication interface modules 350. Data communication between a controller device object and a heating source may be transmitted using the communication interface 350. Furthermore, user communication data from a remote user equipment 150 may also be transmitted using the communication interface 350.

A skilled person appreciates that in addition to the elements shown in Fig. 3, the controller device 220 may comprise other elements, such as microphones, extra displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the controller device 220 may comprise a disposable or rechargeable battery (not shown) for powering when external power if external power supply is not available.

In an embodiment, the system 100, 200 may comprise a user equipment 150 as illustrated in Fig. 1. The block diagram of the user equipment 150 corresponds to the block diagram of the controller device 220 provided in Fig. 3.

Fig. 4 presents an example block diagram of a server apparatus 130 in which various embodiments of the invention may be applied.

The general structure of the server apparatus 120 comprises a processor 410, and a memory 420 coupled to the processor 410. The server apparatus 120 further comprises software 430 stored in the memory 420 and operable to be loaded into and executed in the processor 410. The software 430 may comprise one or more software modules and can be in the form of a computer program product.

The processor 410 may be, e.g., a central processing unit (CPU), a microprocessor, a digital signal processor (DSP), a graphics processing unit, or the like. Fig. 4 shows one processor 410, but the server apparatus 120 may comprise a plurality of processors.

The memory 420 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The server apparatus 120 may comprise a plurality of memories. The memory 420 may be constructed as a part of the server apparatus 120 or it may be inserted into a slot, port, or the like of the server apparatus 120 by a user. The memory 420 may serve the sole purpose of storing data, or it may be constructed as a part of an apparatus serving other purposes, such as processing data.

The communication interface module 450 implements at least part of radio transmission. The communication interface module 450 may comprise, e.g., a wireless or a wired interface module. The wireless interface may comprise such as a WLAN, Bluetooth, infrared (IR), radio frequency identification (RF ID), GSM/GPRS, CDMA, WCDMA, or LTE (Long Term Evolution) radio module. The wired interface may comprise such as universal serial bus (USB), for example. The communication interface module 450 may be integrated into the server apparatus 120, or into an adapter, card or the like that may be inserted into a suitable slot or port of the server apparatus 120. The communication interface module 450 may support one radio interface technology or a plurality of technologies. Quality of service information for heating energies (price, CO2, availability etc.) associated with heating sources of a heating apparatus 110 of Fig. 1 may be received by the server apparatus 120 using the communication interface 450.

The e-mail server process 460, which receives e-mail messages sent from user apparatuses, controller devices 220 and user equipments 150 via the network 140. The e-mail server 460 may comprise a content analyzer module 461, which checks if the content of the received message meets the criteria that are set for new quality of service data item of the service, for example. The content analyzer module 461 may for example check whether the e-mail message contains a valid data item to be used as quality of service data item. The valid data item received by the e-mail server is then sent to an application server 440, which provides application services e.g. relating to the user accounts stored in a user database 470 and content of the content management service. Content provided by the system 100 is stored in a content database 480. The content may comprise the real-time quality of service information, for example.

A skilled person appreciates that in addition to the elements shown in Fig. 4, the server apparatus 120 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like.

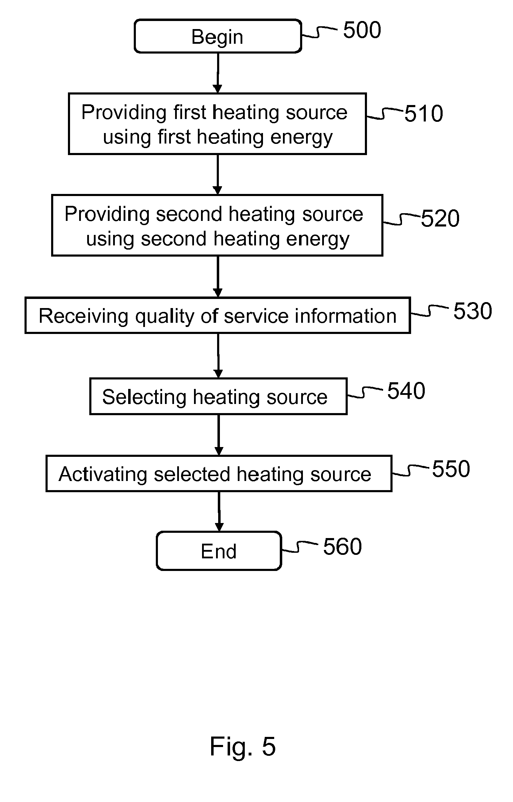

Fig. 5 shows a flow diagram showing operations in accordance with an example embodiment of the invention. In step 500, the method for controlling a heating system is started. In step 510, a first heating source is provided using a first heating energy for providing a heating effect. In step 520, a second heating source is provided using a second heating energy for providing a heating effect. In step 530, quality of service information is received for the first and the second heating energy. In step 540, at least one of the first and the second heating source is selected using the received quality of service information. In step 550, the selected heating source is activated for providing a heating effect. The method is ended in step 560.

Various embodiments have been presented. It should be appreciated that in this document, words comprise, include and contain are each used as open-ended expressions with no intended exclusivity. If desired, the different functions discussed herein may be performed in a different order and/or concurrently with each other. Furthermore, if desired, one or more of the above-described functions may be optional or may be combined. Although various aspects of the invention are set out in the independent claims, other aspects of the invention comprise other combinations of features from the described embodiments and/or the dependent claims with the features of the independent claims, and not solely the combinations explicitly set out in the claims.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. An apparatus comprising:
a first heating source for providing a heating effect using a first heating energy;
**characterized in that** the apparatus further comprising:
a second heating source for providing a heating effect using a second heating energy;
a furnace comprising the first and the second heating source;
a communication interface for transceiving information, between the apparatus and a network;
at least one processor; and
at least one memory including computer program code;
the at least one memory and the computer program code configured to, with the at least one processor, cause the apparatus to:
receive quality of service information for the first and the second heating energy;
select at least one of the first and the second heating source using the received quality of service information; and
activate the selected heating source for providing a heating effect.

2. The apparatus of claim 1, wherein the first and the second heating source comprising at least one of the following:
- fuel based heating; and
- electricity based heating.

3. The apparatus of claim 1, wherein the first heating source comprising fuel based heating and the second heating source comprising electricity based heating.

4. The apparatus of claim 2 or 3, wherein the fuel based heating utilizes at least one of the following fuels:
- natural gas;
- liquefied petroleum gas;
- fuel oil;
- biomass;
- coal; and
- wood.

5. The apparatus of claim 2 or 3, wherein the electricity based heating utilizes at least one of the following:
- national grid electricity;
- local solar electricity;
- local stored electricity; and
- local wind electricity.

6. The apparatus of any of claims 1 to 5, wherein the furnace is configured to heat an intermediary fluid using at least one of the first and the second heating source.

7. The apparatus of claim 6, wherein the intermediary fluid comprising at least one of the following:
- air;
- steam;
- oil; and
- water.

8. The apparatus of any of claims 1 to 7, wherein the at least one memory and the computer program code configured to, with the at least one processor, cause the apparatus to:
maintain user preferences for the first and the second heating energy; and
select at least one of the first and second heating sources using the received quality of service information and the user preferences.

9. The apparatus of any of claims 1 to 8, wherein the quality of service information comprising at least one of the following:
- price information of the heating energy;
- air pollutant information of the heating energy;
- availability information of the heating energy;
- reserve information of the heating energy; and
- service provider information of the heating energy.

10. A method for controlling a heating system, the method comprising:
providing a first heating source using a first heating energy for providing a heating effect:
**characterized in that** the method further comprising:
providing a second heating source using a second heating energy for providing a heating effect, wherein a furnace comprises the first and the second heating source;
receiving quality of service information for the first and the second heating energy;
selecting at least one of the first and the second heating source using the received quality of service information; and
activating the selected heating source for providing a heating effect.

11. A computer program embodied on a computer readable medium comprising computer executable program code **characterized in that** the computer executable program code, when executed by at least one processor of an apparatus, causes the apparatus to:
receive quality of service information for a first and a second heating energy;
select at least one of a first and a second heating source comprised by a furnace using the received quality of service information, wherein the first heating source using the first heating energy for providing a heating effect and the second heating source using the second heating energy for providing a heating effect; and
activate the selected heating source for providing a heating effect.

12. A system comprising:
a server comprising:
a communication interface for transceiving information, between an apparatus and the server;
at least one processor; and
at least one memory including computer program code;
the at least one memory and the computer program code configured to, with the at least one processor, cause the server to:
maintain quality of service information for a first and a second heating energy; and
transmit the quality of service information for the first and the
second heating energy to the apparatus;
**characterized in that** the system further comprising:
the apparatus comprising:
a first heating source for providing a heating effect using the first heating energy;
a second heating source for providing a heating effect using a second heating energy;
a furnace comprising the first and the second heating source;
a communication interface for transceiving information, between the apparatus and a network;
at least one processor; and
at least one memory including computer program code;
the at least one memory and the computer program code configured to, with the at least one processor, cause the apparatus to:
receive the quality of service information for the first and the second heating energy;
select at least one of the first and the second heating source using the received quality of service information; and
activate the selected heating source for providing a heating effect; and
a heating channel comprising:
an intermediary fluid heated by the heating effect, wherein the heated intermediary fluid is configured to transfer heat to an external environment of the heating channel.
